(19) Europäisches Patentamt
European Patent Office
Office européen des brevets

(11) **EP 2 113 901 A2**

(12) **EUROPEAN PATENT APPLICATION**

(43) Date of publication:
**04.11.2009 Bulletin 2009/45**

(51) Int Cl.:
**G09G 3/20** *(2006.01)* **G09G 3/32** *(2006.01)*

(21) Application number: **09251214.4**

(22) Date of filing: **29.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **29.04.2008 KR 20080039848**

(71) Applicant: **Samsung Mobile Display Co., Ltd.**
**Yongin-city, Gyunggi-do 446-711 (KR)**

(72) Inventors:
• **Kim, Gun-Shik**
**Yongin-city, Gyunggi-do (KR)**

• **Kim, Jae-shin**
**Yongin-city, Gyunggi-do (KR)**
• **Oh, Jun-Sik**
**Yongin-city, Gyunggi-do (KR)**

(74) Representative: **Mounteney, Simon James**
**Marks & Clerk LLP**
**90 Long Acre**
**London**
**WC2E 9RA (GB)**

(54) **Flat panel display and method of driving the same**

(57) A flat panel display, which can allow various types of dither masks to be applied, and a driving method thereof are disclosed. The flat panel display includes a look-up table (LUT) storing one dither mask, which is used to algorithmically generate additional dither masks. The dither masks are applied to image data to improve image quality.

## FIG. 1

**Description**

BACKGROUND

Field

The invention relates to a flat panel display and a method of driving the same, and more particularly, to a flat panel display, which can save manufacturing costs and allow various types of dither masks to be applied, and a driving method thereof.

Description of the Related Technology

Recently, there have been various types of flat panel display devices of reduced weight and volume when compared with cathode ray tubes. The flat panel display devices may take the form of a liquid crystal display, a field emission display, a plasma display panel, an organic light emitting display device, and the like.

Among these flat panel display devices, the organic light emitting display device displays images using an organic light emitting diode (OLED) that emits light as a result of the recombination of electrons and holes. The organic light emitting display device has a fast response speed and is driven with low power consumption.

Generally, pixels of an organic light emitting display device display images by charging a predetermined voltage into a storage capacitor Cst included in each of the pixels and by supplying a current corresponding to the charged voltage to an OLED This is called an analog driving method. However, in such a method, there is a limit of gray-level expression because the number of gray levels expressed is related to the precision of the voltage stored in the storage capacitor Cst. Furthermore, it is difficult to display a uniform image due to the threshold voltage and mobility variation of the driving transistors included in each of the pixels.

In order to solve the above problems, a digital driving method has been proposed. In the digital driving method, a data signal corresponding to turn-on or turn-off is supplied to each pixel, and turn-on times of the pixels are controlled during a plurality of sub-frame periods included in each frame. To express the various gray levels, the time for each pixel to be turned on is controlled.

However, in the digital driving method, gray-level expression is limited by the number of sub-frames included in one frame. In order to solve such a problem, a method of increasing gray levels using one or more dither masks is used.

A dither mask is used to increase gray levels and improve false contour noises by additionally selecting light emitting and non-light emitting pixels regardless of input data. Here, if gray levels are increased using one dither mask, a regular pattern (dither noises) may be generated by the dither mask and viewed by the user. In order to solve such a problem, a plurality of dither masks should be alternately used during each successive frame. However, if a plurality of dither masks are included in an organic light emitting display device, the memory needed for the system is increased, and accordingly manufacturing costs are increased.

The present invention sets out to provide a flat panel display and a driving method for such a display that do not suffer from these problems.

SUMMARY OF CERTAIN INVENTIVE APSECTS

One aspect of the invention provides a flat panel display, which includes a look-up table (LUT) storing a dither mask, and a dithering unit configured to produce at least one additional dither mask based on the dither mask stored in the LUT, and to apply different dither masks to image data during each successive frame period to generate dithered data, where the number of perceived gray levels of the dithered data is greater than the number of perceived gray levels of the image data. The display also includes a sub-frame mapping unit configured to map the dithered data to a plurality of sub-frame data patterns included in one frame and to output the mapped data.

Another aspect of the invention provides a method of driving a flat panel display. The method includes storing a dither mask in a look up table (LUT), producing at least one additional dither mask using the stored dither mask, dithering data using different dither masks during every frame period, mapping the dithered data to a plurality of sub-frame patterns included in one frame, and generating data signals using the mapped data.

Another aspect of the invention provides a flat panel display that includes a look-up table (LUT) storing no more than one dither mask, a dithering unit configured to produce additional dither masks based on the stored dither mask, and to apply the additional dither masks to image data to generate dithered data, where the number of perceived gray levels of the dithered data is greater than the number of perceived gray levels of the image data. The display also includes a sub-frame mapping unit configured to map the dithered data to a plurality of sub-frame data patterns included in one frame and to output the mapped data.

BRIEF DESCRIPTION OF THE DRAWINGS

The accompanying drawings, together with the specification, illustrate embodiments of the present invention, and, together with the description, serve to explain the principles of the present invention.

FIG 1 is a block diagram illustrating a flat panel display according to an embodiment.

FIG. 2 is a block diagram illustrating an embodiment of a dithering unit shown in FIG. 1.

FIG. 3 is a view illustrating a dither mask stored in a look-up table (LUT) shown in FIG. 1.

FIGS. 4 to 8 are views illustrating additional dither masks produced by the dither mask shown in FIG. 3.

FIG. 9 is a flowchart showing an embodiment of a method.

DETAILED DESCRIPTION OF CERTAIN INVENTIVE EMBODIMENTS

Hereinafter, certain embodiments of the invention will be described with reference to the accompanying drawings. When a first element is described as being coupled to a second element, the first element may be not only directly coupled to the second element but may also be indirectly coupled to the second element via a third element. Further, some of the elements that are not essential to the complete understanding of the invention are omitted. Also, like reference numerals generally refer to like elements throughout.

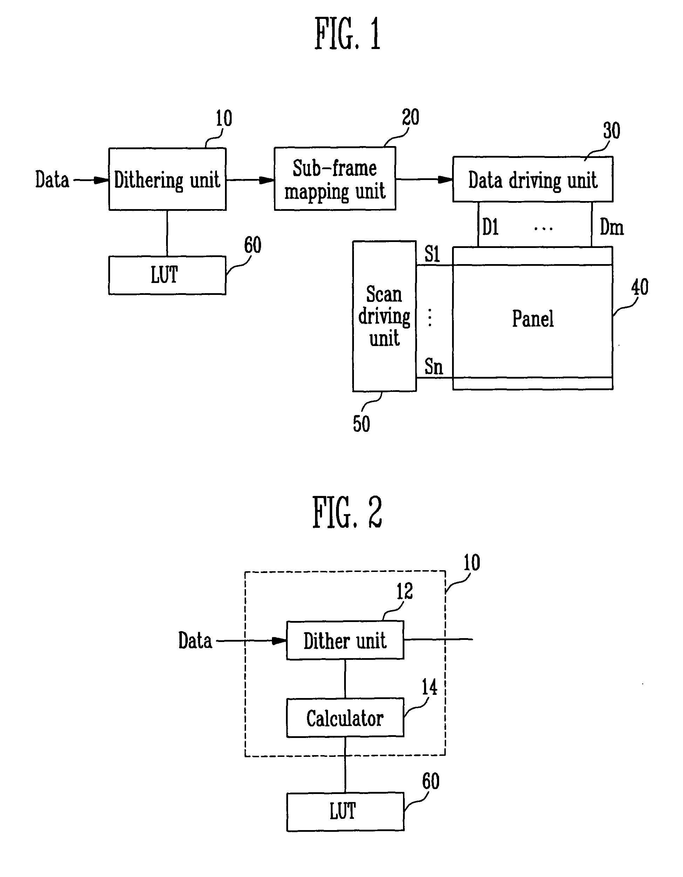

FIG 1 is a block diagram illustrating a flat panel display according to an embodiment.

Referring to FIG. 1, the flat panel display includes a dithering unit 10, a sub-frame mapping unit 20, a data driving unit 30, a scan driving unit 50, a panel 40 and a look-up table 60 (hereinafter, referred to as an "LUT").

One dither mask is stored in the LUT 60. Because one dither mask is stored in the LUT 60, memory requirements are reduced and manufacturing costs are saved accordingly.

The dithering unit 10 receives data. The dithering unit 10 performs dithering using a dither mask, thereby increasing gray levels, as discussed above. For example, the dithering unit 10 additionally selects pixels to be turned on and/or off during a sub-frame period. Because perceived gray levels are increased by the dithering unit 10, false contour noises are improved.

The dithering unit 10 additionally produces one or more dither masks using the one dither mask stored in the LUT 60. The dithering unit 10 applies different dither masks at each successive frame period, so that dithering noises are minimized. The detailed configuration of the dithering unit 10 will be described later.

The sub-frame mapping unit 20 maps the data supplied from the dithering unit 10 to sub-frame data patterns and then outputs the mapped data.

The data driving unit 30 latches the data for each bit from the sub-frame mapping unit 20, and then supplies the latched data as data signals to data lines D1 to Dm of the panel 40 during every horizontal period.

The scan driving unit 50 sequentially supplies a scan signal to scan lines S1 to Sn at every horizontal period of the sub-frame period. Then, pixels (not shown) are sequentially selected for each horizontal line, and data signals are supplied to the selected pixels.

The panel 40 includes pixels respectively disposed near intersection points of the data lines D1 to Dm and the scan lines S1 to Sn. The pixels display an image by emitting light or not emitting light during the sub-frame period, according to the data signals.

FIG. 2 is a block diagram illustrating an embodiment of the dithering unit 10 shown in FIG. 1.

Referring to FIG. 2, the embodiment of dithering unit 10 includes a dither unit 12 and a calculator 14.

The dither unit 12 additionally selects pixels to be turned on and/or off using a dither mask provided from the calculator 14.

The calculator 14 supplies different dither masks to the dither unit 12 during each successive frame period. To this end, the calculator 14 additionally produces at least one dither mask using the dither mask stored in the LUT 60. Then, the dither masks produced by the calculator 14 and the dither mask stored in the LUT 60 are supplied to the dither unit 12 so that different dither masks can be applied during each successive frame period.

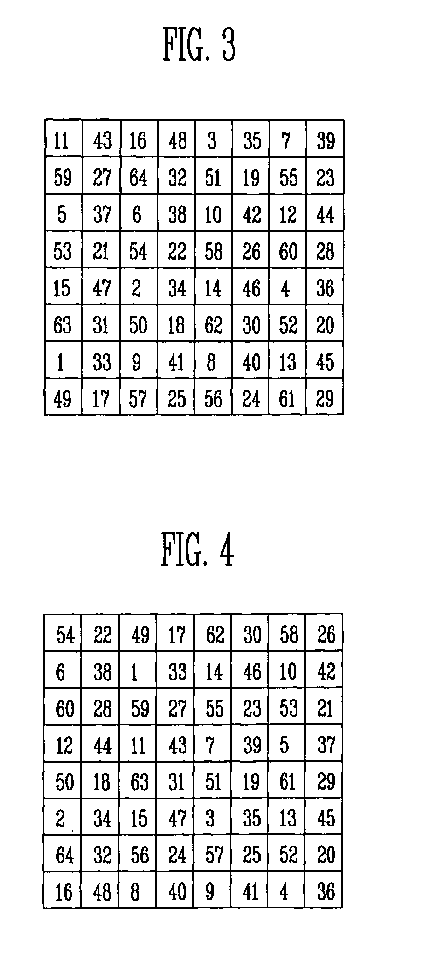

An operation of the calculator 14 will be described in additional detail. A dither mask shown in FIG. 3 is first stored in the LUT 60. Here, the dither mask stored in the LUT 60 is determined so that gray levels can be stably increased. Practically, various types of dither masks known in the art may be stored in the LUT 60.

The calculator 14 produces an additional dither mask using the dither mask stored in the LUT 60. For example, the calculator 14 produces an additional dither mask using "k" expressed by the following Expression 1.

$$i \times j + 1 = k \ \ldots\ldots (1)$$

In the Expression 1, "i" denotes the number of columns of the dither mask stored in the LUT 60, and "j" denotes the number of rows of the dither mask stored in the LUT 60. Since each of the "i" and "j" is 8 in the embodiment shown in FIG. 3, "k" is 65. The calculator 14 that has calculated the value of "k" produces a new dither mask shown in FIG. 4 by subtracting "k" from all numbers included in the dither mask stored in the LUT 60.

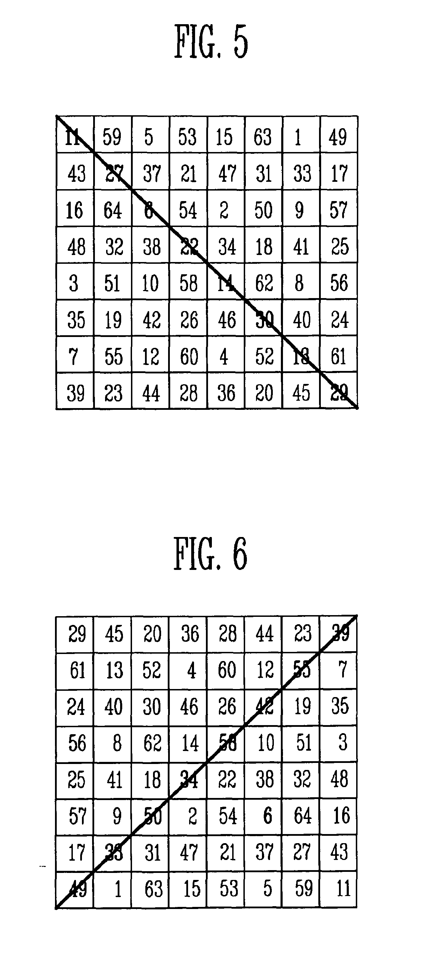

As shown in FIGS. 5 and 6, the calculator 14 may produce a new dither mask by exchanging numbers symmetric about one or more diagonal lines of the dither mask stored in the LUT 60.

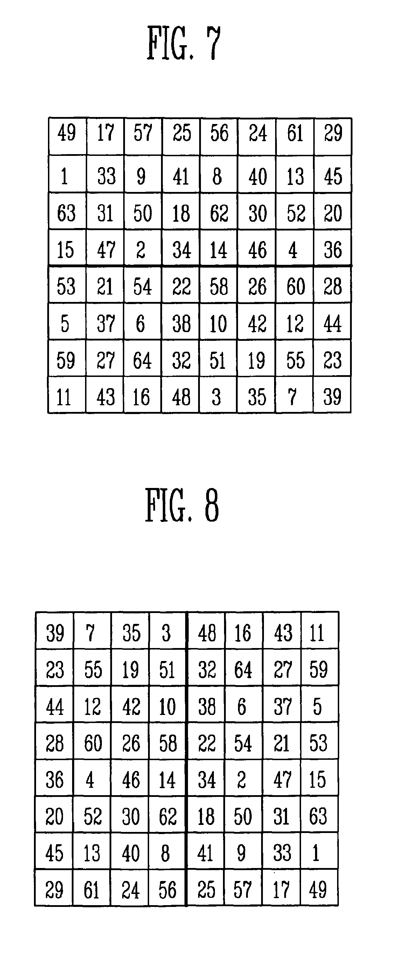

As shown in FIGS. 7 and 8, the calculator 14 may produce a new dither mask by exchange numbers symmetric about a lateral center axis and/or a longitudinal center axis of the dither mask stored in the LUT 60. That is, the calculator 14 of the present invention may produce at least one new dither mask using one dither mask stored in the LUT 60.

The dither unit 12 increases gray levels by applying different dither masks during each successive frame period. For example, the dither unit 12 can increase gray levels by alternately applying the six dither masks shown in FIGS. 3 to 8 during each successive frame period.

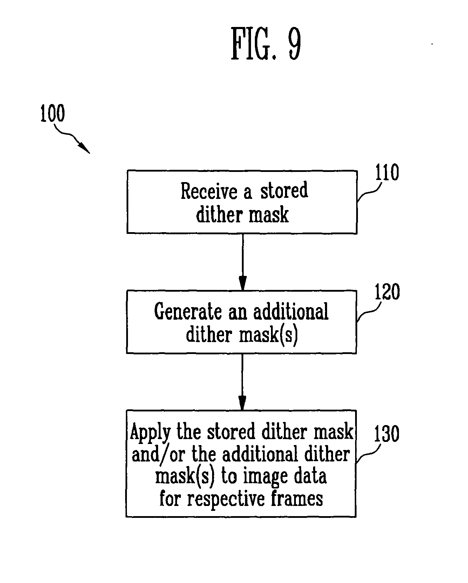

FIG. 9 is a flowchart showing an embodiment of a method 100 used by a display to generate and apply dither masks to image data. At step 110 a dithering unit, such as dithering unit 10 of FIG. 1 receives data of a dither mask. In some embodiments, the dither mask is received from another source.

In step 120, an additional dither mask is generated using the received dither mask. In some embodiments, the additional dither mask is generated by performing an algorithmic operation on the data of the received dither mask. For example, the same data as the received dither mask may be used, where the individual data of the additional dither mask have a different arrangement as that in the received dither mask. For example, the calculator 14 discussed above exchanges data symmetrically about an axis of the dither masks. In some embodiments, the additional dither mask is generated by addition of a constant and performing a modulus operation to each of the data of the received dither mask. Various other operations may be performed to generate additional dither masks.

In step 130 at least two different dither masks are applied to image data to achieve the desired dithering results. In some embodiments, applying the dither masks to image data includes mapping the dithered data to a plurality of sub-frame patterns of a frame, and may also include generating data signals using the mapped data. A first dither mask may be applied to every even number frame, and a second dither mask may be applied to every odd number frame. Additional dither masks and additional arrangements are also beneficial. In some embodiments, the received dither mask is used, while in other embodiments the received dither mask is not used, and two or more additional dither masks are used. In some embodiments, one or more additional dither masks are applied to the image data substantially as the additional dither masks are generated. Accordingly, in some embodiments, only a portion of the additional dither mask or none of the additional dither mask is stored in a memory. In such embodiments, the data of the additional dither mask is lost once it is used. This reduces the memory requirements for the hardware implementing the method 100.

While the present invention has been described in connection with certain exemplary embodiments, it is to be understood that the invention is not limited to the disclosed embodiments, but, on the contrary, is intended to cover various modifications and equivalent arrangements.

**Claims**

1. A flat panel display, comprising:

   a look-up table (LUT) storing a dither mask;
   a dithering unit configured to produce at least one additional dither mask based on the dither mask stored in the LUT, and to apply different dither masks to image data during each successive frame period to generate dithered data, wherein the number of perceived gray levels of the dithered data is greater than the number of perceived gray levels of the image data; and
   a sub-frame mapping unit configured to map the dithered data to a plurality of sub-frame data patterns included in one frame and to output the mapped data.

2. A flat panel display as claimed in claim 1, further comprising:

   a data driving unit configured to receive the mapped data, to generate data signals using the mapped data, and to supply generated data signals to data lines of the display;
   a scan driving unit configured to supply scan signals to scan lines; and
   a plurality of pixels respectively disposed near intersection points of the data lines and the scan lines, and to emit light or to not emitting light during every sub-frame period according to the data signals.

3. A flat panel display as claimed in claim 1 or 2, wherein the dithering unit comprises:

   a calculator configured to produce the at least one additional dither mask; and
   a dither unit configured to generate the dithered data.

4. A flat panel display as claimed in claim 3, wherein the calculator produces the additional dither mask by subtracting a number from all numbers included in the stored dither mask.

5. A flat panel display as claimed in claim 4, wherein the number is produced by adding 1 to the value obtained by multiplying the quantity of rows and the quantity of columns of the stored dither mask.

6. A flat panel display as claimed in claim 3, 4 or 5 wherein the calculator produces the additional dither mask by exchanging numbers symmetrically about a diagonal line of the stored dither mask.

7. A flat panel display as claimed in one of Claims 3 to 6, wherein the calculator produces the additional dither mask by exchanging numbers symmetrically about a lateral center axis or longitudinal center axis of the stored dither mask.

8. A method of driving a flat panel display, the method comprising:

   producing at least one additional dither mask using a stored dither mask;

dithering data using different dither masks during every frame period; mapping the dithered data to a plurality of sub-frame patterns included in one frame; and

generating data signals using the mapped data.

**9.** A method as claimed in claim 8, wherein producing the additional dither mask comprises performing an algorithmic operation on the stored dither mask.

**10.** A method as claimed in claim 8 or 9, wherein the producing the additional dither mask is performed by subtracting a number from all numbers in the stored dither mask.

**11.** A method as claimed in claim 8, 9 or 10 wherein the number is produced by adding 1 to a value obtained by multiplying the quantity of rows and the quantity of columns of the stored dither mask.

**12.** A method as claimed in one of claims 8 to 11, wherein producing the additional dither mask is performed by exchanging numbers symmetric about a diagonal line of the stored dither mask.

**13.** A method as claimed in one of claims 8 to 12, wherein the producing the additional dither mask is performed by exchanging numbers symmetric about a lateral center axis or longitudinal center axis of the stored dither mask.

# FIG. 1

# FIG. 2

# FIG. 3

| 11 | 43 | 16 | 48 | 3  | 35 | 7  | 39 |
|----|----|----|----|----|----|----|----|
| 59 | 27 | 64 | 32 | 51 | 19 | 55 | 23 |
| 5  | 37 | 6  | 38 | 10 | 42 | 12 | 44 |
| 53 | 21 | 54 | 22 | 58 | 26 | 60 | 28 |
| 15 | 47 | 2  | 34 | 14 | 46 | 4  | 36 |
| 63 | 31 | 50 | 18 | 62 | 30 | 52 | 20 |
| 1  | 33 | 9  | 41 | 8  | 40 | 13 | 45 |
| 49 | 17 | 57 | 25 | 56 | 24 | 61 | 29 |

# FIG. 4

| 54 | 22 | 49 | 17 | 62 | 30 | 58 | 26 |
|----|----|----|----|----|----|----|----|
| 6  | 38 | 1  | 33 | 14 | 46 | 10 | 42 |
| 60 | 28 | 59 | 27 | 55 | 23 | 53 | 21 |
| 12 | 44 | 11 | 43 | 7  | 39 | 5  | 37 |
| 50 | 18 | 63 | 31 | 51 | 19 | 61 | 29 |
| 2  | 34 | 15 | 47 | 3  | 35 | 13 | 45 |
| 64 | 32 | 56 | 24 | 57 | 25 | 52 | 20 |
| 16 | 48 | 8  | 40 | 9  | 41 | 4  | 36 |

# FIG. 5

| 11 | 59 | 5  | 53 | 15 | 63 | 1  | 49 |
|----|----|----|----|----|----|----|----|
| 43 | 27 | 37 | 21 | 47 | 31 | 33 | 17 |
| 16 | 64 | 6  | 54 | 2  | 50 | 9  | 57 |
| 48 | 32 | 38 | 22 | 34 | 18 | 41 | 25 |
| 3  | 51 | 10 | 58 | 14 | 62 | 8  | 56 |
| 35 | 19 | 42 | 26 | 46 | 30 | 40 | 24 |
| 7  | 55 | 12 | 60 | 4  | 52 | 18 | 61 |
| 39 | 23 | 44 | 28 | 36 | 20 | 45 | 29 |

# FIG. 6

| 29 | 45 | 20 | 36 | 28 | 44 | 23 | 39 |
|----|----|----|----|----|----|----|----|
| 61 | 13 | 52 | 4  | 60 | 12 | 55 | 7  |
| 24 | 40 | 30 | 46 | 26 | 42 | 19 | 35 |
| 56 | 8  | 62 | 14 | 58 | 10 | 51 | 3  |
| 25 | 41 | 18 | 34 | 22 | 38 | 32 | 48 |
| 57 | 9  | 50 | 2  | 54 | 6  | 64 | 16 |
| 17 | 33 | 31 | 47 | 21 | 37 | 27 | 43 |
| 49 | 1  | 63 | 15 | 53 | 5  | 59 | 11 |

## FIG. 7

| 49 | 17 | 57 | 25 | 56 | 24 | 61 | 29 |
|----|----|----|----|----|----|----|----|
| 1  | 33 | 9  | 41 | 8  | 40 | 13 | 45 |
| 63 | 31 | 50 | 18 | 62 | 30 | 52 | 20 |
| 15 | 47 | 2  | 34 | 14 | 46 | 4  | 36 |
| 53 | 21 | 54 | 22 | 58 | 26 | 60 | 28 |
| 5  | 37 | 6  | 38 | 10 | 42 | 12 | 44 |
| 59 | 27 | 64 | 32 | 51 | 19 | 55 | 23 |
| 11 | 43 | 16 | 48 | 3  | 35 | 7  | 39 |

## FIG. 8

| 39 | 7  | 35 | 3  | 48 | 16 | 43 | 11 |
|----|----|----|----|----|----|----|----|
| 23 | 55 | 19 | 51 | 32 | 64 | 27 | 59 |
| 44 | 12 | 42 | 10 | 38 | 6  | 37 | 5  |
| 28 | 60 | 26 | 58 | 22 | 54 | 21 | 53 |
| 36 | 4  | 46 | 14 | 34 | 2  | 47 | 15 |
| 20 | 52 | 30 | 62 | 18 | 50 | 31 | 63 |
| 45 | 13 | 40 | 8  | 41 | 9  | 33 | 1  |
| 29 | 61 | 24 | 56 | 25 | 57 | 17 | 49 |

# FIG. 9

100

| Receive a stored dither mask | 110 |

↓

| Generate an additional dither mask(s) | 120 |

↓

| Apply the stored dither mask and/or the additional dither mask(s) to image data for respective frames | 130 |